# EUROPEAN PATENT SPECIFICATION

(11) **EP 4 272 020 B1**
(45) Date of publication and mention of the grant of the patent: **28.10.2026**
(21) Application number: 22702543.4
(22) Date of filing: 04.01.2022
(51) Int. Cl.: G01V 11/00, E21B 47/002, G06T 7/00

(54) **GENERATING SYNTHETIC GEOLOGICAL FORMATION IMAGES BASED ON ROCK FRAGMENT IMAGES**
ERZEUGUNG VON SYNTHETISCHEN GEOLOGISCHEN FORMATIONSBILDERN AUF DER BASIS VON GESTEINSFRAGMENTBILDERN
GÉNÉRATION D'IMAGES DE FORMATIONS GÉOLOGIQUES SYNTHÉTIQUES À PARTIR D'IMAGES DE FRAGMENTS DE ROCHE

(30) Priority: 04.01.2021 US 202163133518 P; 01.11.2021 US 202117516302
(43) Date of publication of application: 08.11.2023
(73) Proprietor: Saudi Arabian Oil Company, Dhahran 31311 (SA)
(72) Inventor: ABUALI, Mahdi A., Dhahran, 31311 (SA); MEZGHANI, Mokhles Mustapha, Dhahran, 31311 (SA)
(74) Representative: Fish & Richardson P.C.
(86) International application number: PCT/US2022/011159
(87) International publication number: WO 2022/147552

(56) References cited:
- US-A1- 2007 061 079
- US-A1- 2019 338 637
- US-A1- 2020 225 177

## Description

### CLAIM OF PRIORITY

This patent claims priority to U.S. Provisional Application No. 63/133,518, filed on January 4, 2021, and U.S. Patent Application No. 17/516,302, filed on November 1, 2021.

### TECHNICAL FIELD

The disclosure relates to systems and techniques for generating synthetic geological formation images.

### BACKGROUND

During well bore drilling, portions of a subsurface formation are excavated from the well bore to the surface of the earth. These excavated portions can be used to evaluate the characteristics of the subsurface formation along the well bore. For example, the excavated portions can be used to estimate the porosity, permeability, fractures, and depositional environments of the subsurface formation along the well bore.

US 2019/0338637 describes a method for determining a property of a geological formation based on an optical image of rock samples taken from the formation. The image comprises a plurality of pixels and the method comprises defining windows in the image, each window comprising predetermined number of pixels and being of a predetermined shape. The method also includes, for each window, extracting a rockprint value representative of the window. A rockprint comprises indicators for characterizing a texture of the window.

US 2020/0225177 describes a method for determining properties of subterranean formations surrounding a wellbore. The method includes receiving an image of a formation sample; partitioning the image into a plurality of patches; detecting, via a semantic extraction processor, textures captured in the plurality of patches; associating the textures to a location of the image of the formation sample; reducing a dimension of representation of the textures to obtain one or more vectors, the one or more vectors being based on the textures; and providing a plurality of curves based on the one or more vectors.

US 2007/0061079 describes a method for registration and correction of downhole core depth information using digital core images. Digital core images are employed during depth registration, with top and base depths for a selected interval being determined by field data and a digital ruler which calculates an actual interval length based on the digital core image. Correction of the top and base depths is enabled by side-by-side display of the digital core image interval and corresponding well logging data, which displayed information can be manipulated by a user.

### SUMMARY

This disclosure describes systems and techniques for generating synthetic geological formation images based on rock fragment images. A computerized image synthesis system can obtain several rock fragment images, each representing respective rock fragments that were obtained from a subsurface formation during the drilling of a well bore. The image synthesis system can select one or more portions of the rock fragment images, and based on the selected portions, generate a synthetic geological formation image representing the geological characteristics of the subsurface formation along the well bore. In some implementations, the synthetic geological formation image can approximate, emulate, mimic, resemble, or otherwise be similar to an image of a continuous core sample taken from the subsurface formation.

The implementations described in this disclosure can provide various technical benefits. For instance, an image synthesis system can enable systems and users to evaluate the characteristics of a subsurface formation along the length of a well bore in an accurate manner, without requiring that a continuous core sample be extracted intact from the subsurface formation. As extracting a continuous core sample may be time consuming and may require an expenditure of resources that might otherwise not be expended to drill a well bore, the image synthesis system can reduce the time and effort needed to conduct a drilling operation. Further, the image synthesis can enable systems and users to better evaluate the characteristics of a subsurface formation, such that efforts can be focused on well bores having characteristics that are more favorable for the extraction of valuable resources (for example, oil or natural gas).

Claim 1 relates to a method for generating synthetic geological formation images based on rock fragment images.

Implementations of this aspect can include one or more of the following features.

In some implementations, the one or more geological characteristics of the subsurface formation along the well bore can include at least one of a porosity of the subsurface formation along the well bore or a permeability of the subsurface formation along the well bore.

In some implementations, selecting the one or more selected portions of the rock fragment images can include, for each of the rock fragment images, segmenting the rock fragment image into a plurality of image segments. Each of the image segments can correspond to a different respective rock grain in the rock fragment image.

In some implementations, segmenting the rock fragment image can include identifying one or more edges in the rock fragment image.

In some implementations, segmenting the rock fragment image can include identifying one or more contiguous regions in the rock fragment image.

In some implementations, the rock fragment image can be segmented based on a watershed transformation.

In some implementations, selecting the one or more portions of the rock fragment images can include, for each of the rock fragment images: identifying the image segment corresponding to the rock gain having a largest area among the rock gains in the rock fragment image, and selecting the identified image segment as one of the one or more portions of the rock fragment images.

In some implementations, the geological formation image can include multiple instances of at least one of the one or more selected portions of the rock fragment images.

Other implementations are directed to systems, devices, and devices for performing some or all of the method. Other implementations are directed to one or more non-transitory computer-readable media including one or more sequences of instructions which when executed by one or more processors causes the performance of some or all of the method.

The details of one or more embodiments are set forth in the accompanying drawings and the description. Other features and advantages will be apparent from the description and drawings, and from the claims.

### BRIEF DESCRIPTION OF DRAWINGS

FIG. 1 is a diagram of an example system for generating synthetic geological formation images.
FIG. 2 is a diagram of an example image synthesis system.
FIGS. 3A-3C are diagrams of an example process for selecting portions of a rock fragment image for use in synthesizing a geological formation image.
FIG. 4A is a diagram of an example synthetic geological formation image.
FIG. 4B is a diagram of an example synthetic geological formation image and an example image of a core sample.
FIG. 5 is flow chart diagram of an example process for generating a synthetic geological formation image.
FIG. 6 is a schematic diagram of an example computer system.

### DETAILED DESCRIPTION

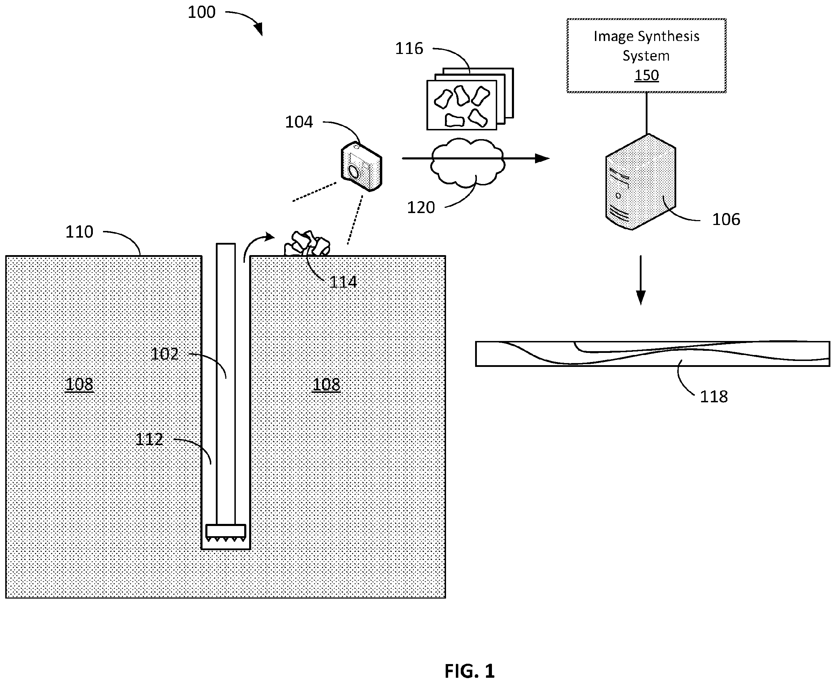

An example system 100 for generating synthetic geological formation images is shown in FIG. 1. The system 100 includes drilling equipment 102, an image capture system 104, and a computer system 106. An image synthesis system 150 is maintained on the computer system 106.

The drilling equipment 102 is configured to drill a well bore 112 through a subsurface formation 108, and to excavate material from the subsurface formation 108 to a surface of the earth 110. For example, the drilling equipment 102 can include one more drills and drill bits configured to cut through the subsurface formation 108 along the well bore 112, and to extract fragments 114 of the subsurface formation 108 along the well bore 112 to the surface of the earth 110. The fragments 114 include one or more pieces of rock that were produced during the drilling processing. In some cases, the fragments 114 may be referred to as "rock fragments" or "rock cuttings."

The image capture system 104 is configured to obtain images 116 of the fragments 114 that were extracted from the subsurface formation 108. As an example, the fragments 114 can be arranged on the surface of the earth 110 (or on another suitable surface, such as a bench top), and the image capture system 104 can capture one or more images of the fragments 114. In some implementations, the image capture system 104 can include one or more still cameras, for example to capture one or more still images of the fragments 114. In some implementations, the image capture system 104 can include one or more video cameras, for example, to capture one or more videos or sequences of images of the fragments 114.

Each of the images 116 can be associated with a particular depth or range of depths beneath the surface of the earth 110. During a drilling process, the fragments 114 that are excavated are associated with progressively lower depths beneath the surface of the earth 110. Accordingly, the images 116 of those fragments 114 are associated with the depths or ranges or depths from which the fragments 114 were obtained.

The images 116 are transmitted via a network 120 to the computer system 106 and the image synthesis system 150 for processing. The network 120 can be any communications network through which data can be transferred and shared. For example, the network 120 can be a local area network (LAN) or a wide-area network (WAN), such as the Internet. The network 120 can be implemented using various networking interfaces, for instance wireless networking interfaces (such as Wi-Fi, Bluetooth, or infrared) or wired networking interfaces (such as Ethernet or serial connection). The network 120 also can include combinations of more than one network, and can be implemented using one or more networking interfaces.

The image synthesis system 150 receives the images 116 via the network 120, and selects one or more portions of the images 116 (namely, portions corresponding to one or more of the fragments 114 or one or more portions thereof). Based on the selected portions, the image synthesis system 150 generates a synthetic geological formation image 118 representing the geological characteristics of the subsurface formation 108 along the well bore 112.

In some implementations, the synthetic geological formation image 118 can approximate, emulate, mimic, resemble, or otherwise be similar to an image of a continuous core sample taken from the subsurface formation 108. For instance, the synthetic geological formation image 118 can include a visual approximation of the subsurface formation 108 along the well bore 112, had it not been fragmented into several fragments 114 by the drilling equipment 102. For example, the dimensions of the synthetic geological formation image 118 can be the same as or can approximate the dimensions of the well bore 112 along a vertical cross section. As another example, the synthetic geological formation image 118 can include a visual representation of a continuous and uninterrupted extent of rock or other material, either along a portion of or the entirety of the synthetic geological formation image 118.

In some implementations, the synthetic geological formation image 118 can be processed to determine information regarding the subsurface formation 108. For example, the synthetic geological formation can provide a visual approximation of the subsurface formation 108 along the length of the well bore 112. As another example, the synthetic geological formation image 118 can be indicative of properties of the subsurface formation 108 along the length of the well bore 112. Example properties include the porosity, permeability, fractures, and depositional environments of the subsurface formation 108.

As described above, the image synthesis system 150 is maintained on the computer system 106. The computer system 106 can be any electronic device (or electronic devices) that is used to view, process, transmit, and/or receive data. Example computer systems 106 include desktop computers, notebook computers, server systems, and mobile computing devices (such as cellular phones, smartphones, tablets, personal data assistants, notebook computers with networking capability). The computer system 106 can include devices that operate using one or more operating system (as examples, Microsoft Windows, Apple macOS, Linux, Unix, Google Android, and Apple iOS,) and/or architectures (as examples, x86, PowerPC, and ARM).

Although the computer system 106 is illustrated as a respective single device in FIG. 1, in practice, the computer system 106 can be implemented using one or more devices (for example, each device including at least one processor such as a microprocessor or microcontroller). A computer system 106 can be, for instance, a single computing device, and the image synthesis system 150 can be maintained and operated on the single computing device. In some implementations, the computer system 106 can include multiple computing devices that are connected to a network (for example, the network 120, or some other network), and the image synthesis system 150 can be maintained and operated on some or all of the computing devices. For instance, the computer system 106 can include several computing devices, and the image synthesis system 150 be distributive on one or more of these computing devices (for example, as a part of a "cloud" computing environment).

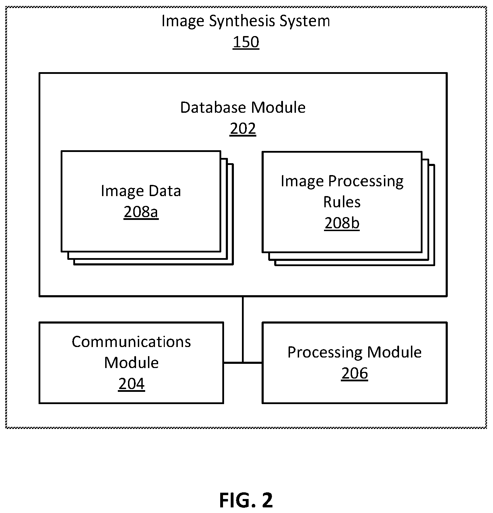

FIG. 2 shows various aspects of the image synthesis system 150. The image synthesis system 150 includes several modules that perform particular functions related to the operation of the system 100. For example, the image synthesis system 150 can include a database module 202, a communications module 204, and a processing module 206.

The database module 202 maintains information related to generating synthetic geological formation images.

The database module 202 can store image data 208a received by or generated by the system 100. For example, the database module 202 can store one or more of the images 116 received from the image capture system 104. As another example, the database module 202 can store one or more synthetic geological formation images 118 generated by the image synthesis system 150. As another example the database module 202 can store one or more images of core samples obtained from one or more subsurface formations (for example, continuous core sample that were extracted intact from subsurface formations).

Further, the database module 202 can store information regarding each of the images. For example, the database module 202 can store an indication of the depth or ranges of depths associated with each of the images 116. As another example, the database module 202 can store an indication of the particular well bore that is associated with each of the images 116. As another example, the database module 20 can store an indication of the particular well bore that is associated with each of the images of the core samples.

The database module 202 can also store data records of one or more image processing rules 208b for processing the images 116 and generating the synthetic geological formation images 118.

As an example, the image processing rules 208b can specify how one or more portions the images 116 are selected for use in generating synthetic geological formation images 118. For instance, the image processing rules 208b can specify that portions of the images 116 having certain characteristics be selected over portions of images 116 having other characteristics.

In some implementations, the image processing rules 208b can specify that each of the images 116 be segmented into different image segments, and that one or more of the image segments be selected for use in generating synthetic geological formation images 118.

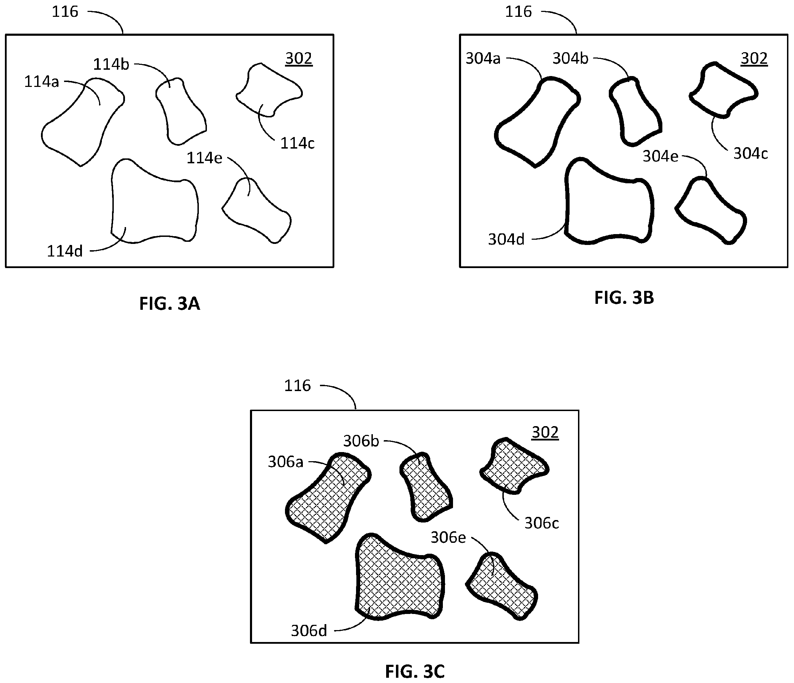

A simplified example of an image segmentation and selection process is shown in FIGS. 3A-3C.

In this example, an image 116 depicts several fragments 114a-114e overlaid on a background 302 (for example, as shown in FIG. 3A). The image processing rules 208b can specify that the image 116 be processed in a particular manner to identify the fragments 114a-114e depicted in the image 116.

In some implementations, the image processing rules 208b can specify that this be performed, at least in part, by identifying one or more edges in the image 116. For example, as shown in FIG. 3B, the image 116 can be processed such that the edges 304a-304e of the fragments 114a-114e, respectively, are detected within the image 116. The portions 306a-306e of the image 116 that enclosed by the edges 304a-304e, respectively (for example, as shown in FIG. 3C), can be identified as candidate image segments for selection. In some implementations, the image processing rules 208b can specify that edge detection be performed according to a particular technique, such as using a Canny edge detector or an image threshold technique.

In some implementations, portions 306a-306e can be identified using a watershed transformation. A watershed transformation a mathematical transformation defined on a grayscale image. The name refers metaphorically to a geological watershed, or drainage divide, which separates adjacent drainage basins. The watershed transformation treats the image it operates upon like a topographic map, with the brightness of each point representing its height, and finds the lines that run along the tops of ridges. Different image segments can be identified by identifying regions of the image in which water would metaphorically settle.

For example, in some implementations, a transformation function W is a watershed of a function F if and only if *W* ≤ F and W preserves the contrast between the regional minima of F, where the contrast between two regional minima M1 and M2 is defined as the minimal "altitude" (for example, image identity) that is climbed when going from M1 to *M2.* In some implementations, local minima of the gradient of the image 116 can be chosen as markers (for example, to produce an over-segmentation), and multiple image segments can be subsequently merged together. In some implementations, a marker-based watershed transformation can make use of specific marker positions that have been either explicitly defined (for example, by a user) or determined automatically with morphological operators or using other techniques.

Further, the image processing rules 208b can specify how one or more images segments of the images 116 are selected for use in over others for use in generating a synthetic geological formation image 118. As an example, in some implementations, the image processing rules 208b can specify that the image segment having the largest area among the image segments in an image be selected (for example, corresponding to the rock fragment having the largest continuous "grain" in the image). The area of an image segment can be calculated, for example, by counting the number of pixels that are included in the image segment (for example, the number of pixels that are enclosed by a detected edge). For instance, in the example shown in FIG. 3C, the portion 306d has the largest area from among the portions 306a-306e. Accordingly, the portion 306d can be selected over the other portions 306a-306c and 306e.

Further, the image processing rules 208b can specify how the synthetic geological formation images 118 are generated based on the selected portions of the images 116. For instance, the image processing rules 208b can specify that the selected portions of the images 116 be arranged according to particular orientation in a synthetic geological formation image 118. Further, the image processing rules 208b can specify that the selected portions of the images 116 have a particular dimensions or be scaled to a particular degree in a synthetic geological formation image 118. Further, the image processing rules 208b can specify that the selected portions of the images 116 be spatially arranged in a particular manner relative to one another in a synthetic geological formation image 118.

As described above, each of the images 116 is associated with a particular depth or range of depths beneath the surface of the earth 110. For example, the fragments 114 depicted in a particular image 116 may have been obtained from a particular depth during operation of the drilling equipment 102, and thus may be indicative of the characteristics of the subsurface formation 108 at or around that depth. Accordingly, in the synthetic geological formation image 118, the selected portions of the images 116 are arranged relative one another in ascending or descending order according to their respective depths. This can be beneficial, for example, as it enables a system or a user to determine the characteristics of the subsurface formation 108 along a continuous and/or monotonic range of depths that spans the depths of each of the images 116 used to generate the synthetic geological formation image 118.

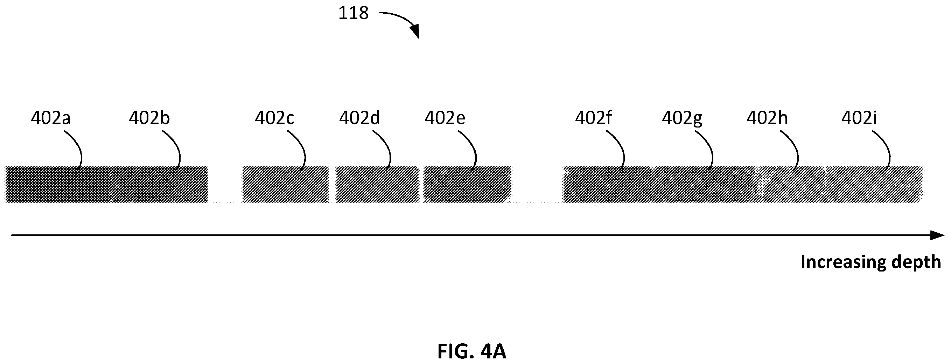

To illustrate, FIG. 4A shows an example synthetic geological formation image 118 generated using one or more of the techniques described herein. In this example, the synthetic geological formation image 118 includes several portions 402a-402h (for example, selected from respective images 116 of fragments 114 obtained from different depths beneath the surface of the earth 110). The portions 402a-402i are arranged in a sequence, in order of increasing depth (for example, from left to right).

In some implementations, the image processing rules 208b can specify that a synthetic geological formation image 118 be generated by positioning two or more of the selection portions of the images 116 end-to-end, such that there are no gaps between adjacent portions. For instance, in the example shown in FIG. 4A, the portions 402f-402i are positioned end-to-end, such that there are no gaps between them.

In some implementations, the image processing rules 208b can specify that a synthetic geological formation image 118 be generated by positioning two or more of the selection portions of the images 116 such that there are gaps between adjacent portions. For instance, in the example shown in FIG. 4A, the portions 402b and 402c are positioned such that there is a gap between them (for example, a void region with no visual information is between them).

In some implementations, the image processing rules 208b can specify that a synthetic geological formation image 118 be generated by positioning selected portions of the images 116 according to regular or periodic intervals. As an example, the image processing rules 208b can specify that the selected portions of the images 116 be positioned sequentially in order of depth, and in increments of 3 m (10 feet) in depth. For instance, the first selected portion can represent the characteristics of the subsurface formation 108 at a depth of 3 m (10 feet), the second selected portion can represent the characteristics of the subsurface formation 108 at a depth of 6 m (20 feet), the third selected portion can represent the characteristics of the subsurface formation 108 at a depth of 9 m (30 feet), and so on.

The image processing rules 208b specify that one or more portions of the synthetic geological formation image 118 be extrapolated or interpolated based on the selected portions of the images 116. For instance, in some implementations, the synthetic geological formation image 118 can include multiple instances of a particular selected portion of the image 116. The selected portion of the image 116 can correspond to a particular depth beneath the surface of the earth 110, and can be used to represent the subsurface formation 108 at and around that particular depth. As an example, a portion of an image can correspond to a depth of 30.5 m (100 feet) beneath the surface of the earth 110. The image processing rules 208b can specify that the synthetic geological formation image include multiple instances of that portion of the image to represent a range of depths around 30.5 m (100 feet) (for example, 27.4 m to 33.5 m (90 feet to 110 feet)).

Referring back to FIG. 2, the communications module 204 allows for the transmission of data to and from the image synthesis system 150. For example, the communications module 204 can be communicatively connected to the network 120, such that it can receive data the image capture system 104. Information received from the image capture system 104 can be processed (for example, using the processing module 206) and stored (for example, using the database module 202).

Further, information from the image synthesis system 150 (for example, information stored on the database module 202) can be transmitted to the other systems or devices through the communications module 204. For example, the communications module 204 can transmit the synthetic geological formation images 118 generated by the image synthesis system 150 to one or more other computer systems for review or further processing.

The processing module 206 processes data stored or otherwise accessible to the image synthesis system 150. For instance, the processing module 206 can receive one or more images 116 (for example, stored as image data 208a), and process the images 116 based on the image processing rules 208b to generate one or more synthetic geological formation images 118. As an example, as described above, the processing module 206 can select one or more portions the images 116 based on the image processing rules 208b. Further, based on the image processing rules 208b, the processing module 206 can generate one or more synthetic geological formation images 118 using the selected portions, such as by arranging the selected portions occurring to particular orientations, scaling the dimensions of the selections portions to a particular degree, and spatially arranging the selected portions relative to one another in a particular manner.

In some implementations, the image synthesis system 150 can be calibrated or "trained" based on actual core samples that have been taken from the subsurface formation. For example, a continuous core sample can be extracted intact from subsurface formation (for example, a core sample that extends along a range of depths beneath the surface of the earth 110), and one or more images of the core sample can be obtained by the image capture system 104. Further, portions of or all of the core sample can be fragmented into several fragments, and fragments from particular depths or ranges of depths can be grouped together. The image capture system 104 can obtain images of each of the groups of fragments (for example, in a similar manner as described with respect to FIG. 1). These images can be used to generate one or more synthetic geological formation images 118, as described above.

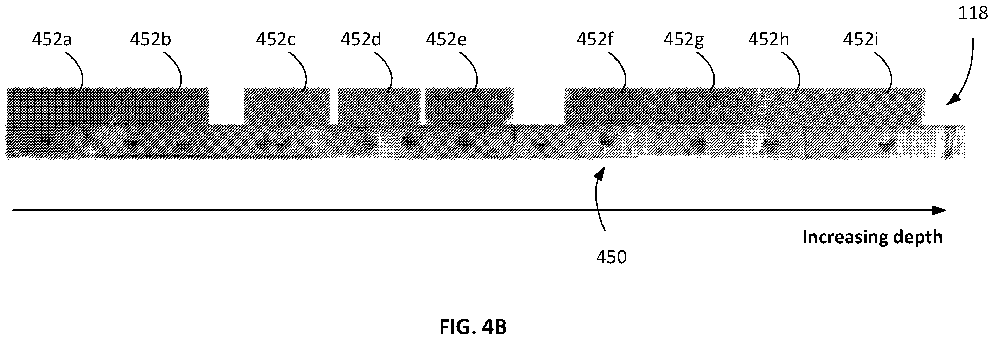

To illustrate, FIG. 4B shows an example image 450 of a core sample extracted from a subsurface formation 108. As shown in the image 450, a number of plugs (for example, small circular sections of the core sample) have been removed from core sample along its length (for example, corresponding to different depths beneath the surface of the earth 110). These plugs can be crushed (for example, using a press, hammer, chisel, or some other tool), such that they resemble or mimic rock cuttings that might be obtained while drilling a well bore in the subsurface formation 108.

In a similar manner as describe above, image of the crushed plugs can be obtained using the image capture system 104, and a synthetic geological formation image 118 can be generated using one or more of the techniques described herein. In this example, the synthetic geological formation image 118 includes several portions 452a-452h (for example, selected from respective images of the crushed plugs obtained from different depths along the core sample). The portions 452a-452i are arranged in a sequence, in order of increasing depth (for example, from left to right).

The image synthesis system 150 can compare the images of the core sample (for example, the image 450) to the synthetic geological formation images 118. Based on this comparison, the image synthesis system 150 can modify one or more of the image processing rules 208b, such that the synthetic geological formation images 118 generated based on the images of the fragments (in accordance with the image processing rules 208b) would more similar to the images of the core sample. In some implementations, this process can be performed using images of core samples and synthetic geological formation images (for example, generated using images of crushed plugs taken from the core samples) for multiple different well bores to calibrate or train the image synthesis system 150. For example, these images can be used as a "training" data set that shows known relationships between core samples and their corresponding rock cuttings.

After calibration or training, the image synthesis system 150 can be used to generate synthetic geological formation images 118 based on images of fragments obtained from other well bores. In some implementations, the calibration or training process can be performed iteratively over time (for example, using additional sets of training data), such that operation of the image synthesis system 150 is continuously improved.

### Example Processes

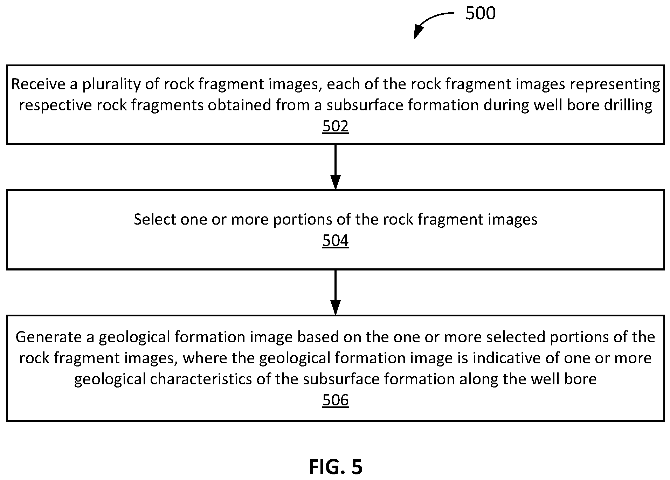

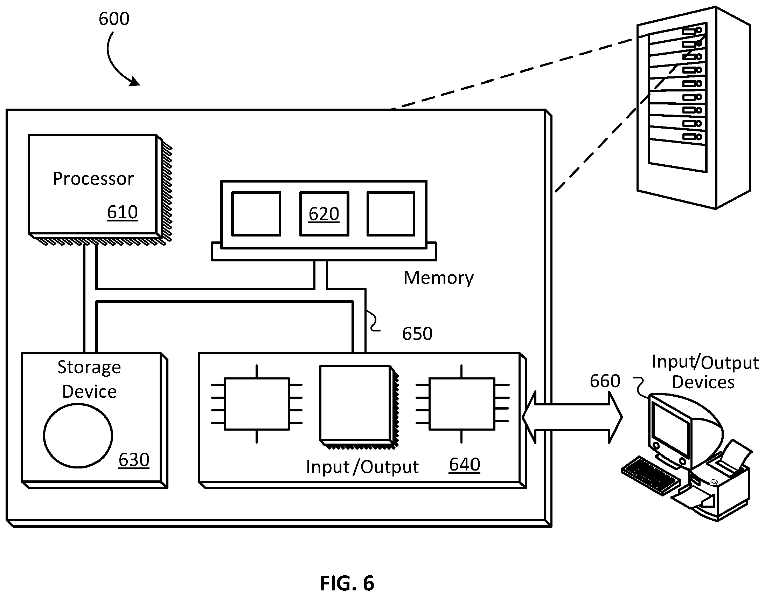

A process 500 for generating a synthetic geological formation image is shown in FIG. 5. In some implementations, the process 500 can be performed by the image synthesis systems described in this disclosure (for example, the image synthesis system 150 shown and described with respect to FIGS. 1 and 2) using one or more processors (for example, the processors 610 shown in FIG. 6).

In the process 500, one or more processors receive a plurality of rock fragment images (block 502). Each of the rock fragment images represents respective rock fragments obtained from a subsurface formation during well bore drilling. As an example, referring to FIG. 1, an image capture system 104 can capture images 116 of fragments 114 (for example, rock fragments or rock cuttings) obtained from the subsurface formation 108 during a drilling operation using the drilling equipment 102.

The one or more processors select one or more portions of the rock fragment images (block 504).

Selecting the one or more selected portions of the rock fragment images includes, for each of the rock fragment images, segmenting the rock fragment image into a plurality of image segments. Each of the image segments can correspond to a different respective rock grain in the rock fragment image.

In some implementations, segmenting the rock fragment image can include identifying one or more edges in the rock fragment image. In some implementations, segmenting the rock fragment image can include identifying one or more contiguous regions in the rock fragment image. In some implementations, the rock fragment image can be segmented based on a watershed transformation.

In some implementations, selecting the one or more portions of the rock fragment images can include, for each of the rock fragment images, (i) identifying the image segment corresponding to the rock gain having a largest area among the rock gains in the rock fragment image, and (ii) selecting the identified image segment as one of the one or more portions of the rock fragment images. The area of an image segment can be calculated, for example, by counting the number of pixels that are included in the image segment (for example, the number of pixels that are enclosed by a detected edge).

The one or more processors generate a geological formation image based on the one or more selected portions of the rock fragment images (block 506). The geological formation image is indicative of one or more geological characteristics of the subsurface formation along the well bore. In some implementations, the one or more geological characteristics of the subsurface formation along the well bore can include a porosity of the subsurface formation along the well bore and/or a permeability of the subsurface formation along the well bore.

The plurality of rock fragment images can represent rock fragments obtained from the subsurface formation at a plurality of depths along the well bore. Further, the geological formation image is indicative of the one or more geological characteristics of the subsurface formation at each of the depths along the well bore. For example, referring to FIG. 1, during a drilling process, the fragments 114 that are excavated may be associated with progressively lower depths beneath the surface of the earth 110. Accordingly, the images 116 of those fragments 114 are associated with the depths or ranges or depths from which the fragments 114 were obtained. Further, the geological formation image is indicative of one or more geological characteristics of the subsurface formation at each of those depths.

The plurality of rock fragment images represent rock fragments obtained from the subsurface formation at a plurality of first depths along the well bore. Further, geological formation image can be indicative of the one or more geological characteristics of the subsurface formation at each of the first depths and at each of a plurality of second depths along the well bore, where the first depths are different from the second depths. One or more portions of the geological formation image are extrapolated or interpolated based on the rock fragment images.

Generating the geological formation image includes combining the one more selected portions of the rock fragment images into the geological formation image. Combining the one or more selected portions of the first rock fragment images into the second geological formation image includes arranging the one more selected portions of the first rock fragment images sequentially along a first dimension in the geological formation image.

Each of the one or more selected portions of the first rock fragment images is associated with a respective depth. Further, the one more selected portions of the first rock fragment images is arranged sequentially in the geological formation image according to depth.

**In** some implementations, the geological formation image can include multiple instances of at least one of the one or more selected portions of the rock fragment images.

### Example Systems

Some implementations of the subject matter and operations described in this specification can be implemented in digital electronic circuitry, or in computer software, firmware, or hardware, including the structures disclosed in this specification and their structural equivalents, or in combinations of one or more of them. For example, in some implementations, one or more components of the system 100 and image synthesis system 150 can be implemented using digital electronic circuitry, or in computer software, firmware, or hardware, or in combinations of one or more of them. In another example, the process 500 shown in FIG. 5 can be implemented using digital electronic circuitry, or in computer software, firmware, or hardware, or in combinations of one or more of them.

Some implementations described in this specification can be implemented as one or more groups or modules of digital electronic circuitry, computer software, firmware, or hardware, or in combinations of one or more of them. Although different modules can be used, each module need not be distinct, and multiple modules can be implemented on the same digital electronic circuitry, computer software, firmware, or hardware, or combination thereof.

Some implementations described in this specification can be implemented as one or more computer programs, that is, one or more modules of computer program instructions, encoded on computer storage medium for execution by, or to control the operation of, data processing apparatus. A computer storage medium can be, or can be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (for example, multiple CDs, disks, or other storage devices).

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, for example, an FPGA (field programmable gate array) or an ASIC (application specific integrated circuit). The apparatus can also include, in addition to hardware, code that creates an execution environment for the computer program in question, for example, code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages. A computer program may, but need not, correspond to a file in a file system. A program can be stored in a portion of a file that holds other programs or data (for example, one or more scripts stored in a markup language document), in a single file dedicated to the program in question, or in multiple coordinated files (for example, files that store one or more modules, sub programs, or portions of code). A computer program can be deployed to be executed on one computer or on multiple computers that are located at one site or distributed across multiple sites and interconnected by a communication network.

Some of the processes and logic flows described in this specification can be performed by one or more programmable processors executing one or more computer programs to perform actions by operating on input data and generating output. The processes and logic flows can also be performed by, and apparatus can also be implemented as, special purpose logic circuitry, for example, an FPGA (field programmable gate array) or an ASIC (application specific integrated circuit).

Processors suitable for the execution of a computer program include, by way of example, both general and special purpose microprocessors, and processors of any kind of digital computer. Generally, a processor will receive instructions and data from a read only memory or a random access memory or both. A computer includes a processor for performing actions in accordance with instructions and one or more memory devices for storing instructions and data. A computer can also include, or be operatively coupled to receive data from or transfer data to, or both, one or more mass storage devices for storing data, for example, magnetic, magneto optical disks, or optical disks. However, a computer need not have such devices. Devices suitable for storing computer program instructions and data include all forms of non-volatile memory, media and memory devices, including by way of example semiconductor memory devices (for example, EPROM, EEPROM, AND flash memory devices), magnetic disks (for example, internal hard disks, and removable disks), magneto optical disks, and CD-ROM and DVD-ROM disks. The processor and the memory can be supplemented by, or incorporated in, special purpose logic circuitry.

To provide for interaction with a user, operations can be implemented on a computer having a display device (for example, a monitor, or another type of display device) for displaying information to the user. The computer can also include a keyboard and a pointing device (for example, a mouse, a trackball, a tablet, a touch sensitive screen, or another type of pointing device) by which the user can provide input to the computer. Other kinds of devices can be used to provide for interaction with a user as well. For example, feedback provided to the user can be any form of sensory feedback, such as visual feedback, auditory feedback, or tactile feedback. Input from the user can be received in any form, including acoustic, speech, or tactile input. In addition, a computer can interact with a user by sending documents to and receiving documents from a device that is used by the user. For example, a computer can send webpages to a web browser on a user's client device in response to requests received from the web browser.

A computer system can include a single computing device, or multiple computers that operate in proximity or generally remote from each other and typically interact through a communication network. Examples of communication networks include a local area network ("LAN") and a wide area network ("WAN"), an inter-network (for example, the Internet), a network including a satellite link, and peer-to-peer networks (for example, ad hoc peer-to-peer networks). A relationship of client and server can arise by virtue of computer programs running on the respective computers and having a client-server relationship to each other.

FIG. 6 shows an example computer system 600 that includes a processor 610, a memory 620, a storage device 630 and an input/output device 640. Each of the components 610, 620, 630 and 640 can be interconnected, for example, by a system bus 650. In some implementations, the computer system 600 can be used to control the operation of the system 100. For example, the image synthesis system 150 in FIG. 1 can include a computer system 600 to generate one or more synthetic geological formation images based on rock fragment images. The processor 610 is capable of processing instructions for execution within the system 600. In some implementations, the processor 610 is a single-threaded processor, a multi-threaded processor, or another type of processor. The processor 610 is capable of processing instructions stored in the memory 620 or on the storage device 630. The memory 620 and the storage device 630 can store information within the system 600.

The input/output device 640 provides input/output operations for the system 600. In some implementations, the input/output device 640 can include one or more of a network interface device, for example, an Ethernet card, a serial communication device, for example, an RS-232 port, or a wireless interface device, for example, an 802.11 card, a 3G wireless modem, a 4G wireless modem, or a 5G wireless modem, or both. In some implementations, the input/output device can include driver devices configured to receive input data and send output data to other input/output devices, for example, keyboard, printer and display devices 660. In some implementations, mobile computing devices, mobile communication devices, and other devices can be used.

While this specification contains many details, these should not be construed as limitations on the scope of what may be claimed, but rather as descriptions of features specific to particular examples. Certain features that are described in this specification in the context of separate implementations can also be combined. Conversely, various features that are described in the context of a single implementation can also be implemented in multiple embodiments separately or in any suitable subcombination.

A number of embodiments have been described. It should be noted and understood that improvements and modifications of the embodiments described above may be made, within the scope of the appended claims.

## Claims

1. A method for generating a synthetic image of a geological formation (108), the method comprising:
receiving (502), by one or more processors, a plurality of rock fragment images (116), wherein each of the rock fragment images is an image of a plurality of respective rock cuttings (114) obtained from a subsurface formation during well bore drilling, wherein each of the rock fragment images (116) is associated with a particular depth or range of depths beneath the surface of the earth (110) from which the rock cuttings in the image were obtained;
selecting (504), by the one or more processors, portions of the rock fragment images, wherein the selected portions correspond to a rock cutting (114) or a portion of a rock cutting (114); and
generating (506), by the one or more processors, a geological formation image (118) based on the selected portions of the rock fragment images, wherein the geological formation image (118) is indicative of one or more geological characteristics of the subsurface formation at each of the depths along the well bore (112),
wherein generating the geological formation image comprises combining the selected portions of the rock fragment images into the geological formation image, wherein combining the selected portions of the rock fragment images into the geological formation image comprises
arranging the one more selected portions of the rock fragment images sequentially along a first dimension in the geological formation image, wherein the one more selected portions of the rock fragment images are arranged sequentially in the geological formation image according to depth and
extrapolating or interpolating a portion of the geological formation image (118) based on the selected rock fragment images.

2. The method of claim 1, wherein the one or more geological characteristics of the subsurface formation along the well bore comprise at least one of:
a porosity of the subsurface formation along the well bore, or
a permeability of the subsurface formation along the well bore.

3. The method of claim 1, wherein selecting the selected portions of the rock fragment images comprises:
for each of the rock fragment images, segmenting the rock fragment image into a plurality of image segments, wherein each of the image segments corresponds to a different respective rock grain in the rock fragment image.

4. The method of claim 3, wherein segmenting the rock fragment image comprises identifying edges (304) in the rock fragment image.

5. The method of claim 3, wherein segmenting the rock fragment image comprises identifying contiguous regions in the rock fragment image.

6. The method of claim 3, the rock fragment image is segmented based on a watershed transformation.

7. The method of claim 3, wherein selecting the portions of the rock fragment images comprises:
for each of the rock fragment images:
identifying the image segment corresponding to the rock grain having a largest area among the rock grains in the rock fragment image, and
selecting the identified image segment as one of the portions of the rock fragment images.

8. The method of claim 1, wherein the geological formation image comprises multiple instances of at least one of the selected portions of the rock fragment images.

9. The method of any preceding claim, wherein extrapolating or interpolating the portion of the geological formation image (118) based on the selected rock fragment images geological formation image (118) comprises including multiple instances of a particular selected portion of a first of the rock fragment images to represent the subsurface formation 108 at and around a particular depth of the particular selected portion of the first of the rock fragment images.

10. A system comprising:
one or more processors; and
one or more non-transitory computer readable media storing instructions that, when executed by the one or more processors, cause the one or more processors to perform operations comprising the method of any one of claims 1 to 9.

11. One or more non-transitory computer readable media storing instructions that, when executed by one or more processors, cause the one or more processors to perform operations comprising the method of any one of claims 1 to 9.

## Patentansprüche

1. Verfahren zum Erzeugen eines synthetischen Bilds einer geologischen Formation (108), wobei das Verfahren Folgendes umfasst:
Empfangen (502), durch einen oder mehrere Prozessoren, mehrerer Gesteinsbruchstückbilder (116), wobei jedes der Gesteinsbruchstückbilder ein Bild mehrerer jeweiliger Bohrkleinstücke (114) ist, die aus einer unterirdischen Formation während einer Bohrlochbohrung erhalten werden, wobei jedes der Gesteinsbruchstückbilder (116) mit einer bestimmten Tiefe oder einem bestimmten Bereich von Tiefen unterhalb der Oberfläche der Erde (110), aus der die Bohrkleinstücke in dem Bild erhalten wurden, assoziiert ist;
Auswählen (504), durch den einen oder die mehreren Prozessoren, von Abschnitten der Gesteinsbruchstückbilder, wobei die ausgewählten Abschnitte einem Bohrkleinstück (114) oder einem Abschnitt eines Bohrkleinstücks (114) entsprechen; und
Erzeugen (506), durch den einen oder die mehreren Prozessoren, eines Bilds (118) einer geologischen Formation basierend auf den ausgewählten Abschnitten der Gesteinsbruchstückbilder, wobei das Bild (118) einer geologischen Formation indikativ für eine oder mehrere geologische Eigenschaften der unterirdischen Formation in jeder der Tiefen entlang des Bohrlochs (112) ist,
wobei das Erzeugen des Bilds einer geologischen Formation das Kombinieren der ausgewählten Abschnitte der Gesteinsbruchstückbilder zu dem Bild einer geologischen Formation umfasst, wobei das Kombinieren der ausgewählten Abschnitte der Gesteinsbruchstückbilder zu dem Bild einer geologischen Formation Folgendes umfasst:
Anordnen des einen oder der mehreren ausgewählten Abschnitte der Gesteinsbruchstückbilder sequentiell entlang einer ersten Dimension in dem Bild einer geologischen Formation, wobei der eine oder die mehreren ausgewählten Abschnitte der Gesteinsbruchstückbilder sequentiell in dem Bild einer geologischen Formation in Abhängigkeit von der Tiefe angeordnet werden, und
Extrapolieren oder Interpolieren eines Abschnitts des Bilds (118) einer geologischen Formation basierend auf den ausgewählten Gesteinsbruchstückbildern.

2. Verfahren nach Anspruch 1, wobei die eine oder die mehreren geologischen Eigenschaften der unterirdischen Formation entlang des Bohrlochs mindestens eines von Folgendem umfassen:
einer Porosität der unterirdischen Formation entlang des Bohrlochs oder
einer Permeabilität der unterirdischen Formation entlang des Bohrlochs.

3. Verfahren nach Anspruch 1, wobei das Auswählen der ausgewählten Abschnitte der Gesteinsbruchstückbilder Folgendes umfasst:
für jedes der Gesteinsbruchstückbilder Segmentieren des Gesteinsbruchstückbilds in mehrere Bildsegmente, wobei jedes der Bildsegmente einem unterschiedlichen jeweiligen Gesteinskorn in dem Gesteinsbruchstückbild entspricht.

4. Verfahren nach Anspruch 3, wobei das Segmentieren des Gesteinsbruchstückbilds das Identifizieren von Kanten (304) in dem Gesteinsbruchstückbild umfasst.

5. Verfahren nach Anspruch 3, wobei das Segmentieren des Gesteinsbruchstückbilds das Identifizieren zusammenhängender Regionen in dem Gesteinsbruchstückbild umfasst.

6. Verfahren nach Anspruch 3, wobei das Gesteinsbruchstückbild basierend auf einer Wasserscheidentransformation segmentiert wird.

7. Verfahren nach Anspruch 3, wobei das Auswählen der Abschnitte der Gesteinsbruchstückbilder Folgendes umfasst:
für jedes der Gesteinsbruchstückbilder:
Identifizieren des Bildsegments, das dem Gesteinskorn mit einer größten Fläche unter den Gesteinskörnern in dem Gesteinsbruchstückbild entspricht, und
Auswählen des identifizierten Bildsegments als einen der Abschnitte der Gesteinsbruchstückbilder.

8. Verfahren nach Anspruch 1, wobei das Bild einer geologischen Formation mehrere Instanzen mindestens eines der ausgewählten Abschnitte der Gesteinsbruchstückbilder umfasst.

9. Verfahren nach einem der vorhergehenden Ansprüche, wobei das Extrapolieren oder Interpolieren des Abschnitts des Bilds (118) einer geologischen Formation basierend auf dem Bild (118) einer geologischen Formation der ausgewählten Gesteinsbruchstückbilder das Einschließen mehrerer Instanzen eines bestimmten ausgewählten Abschnitts eines ersten der Gesteinsbruchstückbilder umfasst, um die unterirdische Formation 108 bei und um eine bestimmte Tiefe des bestimmten ausgewählten Abschnitts des ersten der Gesteinsbruchstückbilder herum darzustellen.

10. System, das Folgendes umfasst:
einen oder mehrere Prozessoren; und
ein oder mehrere nicht transitorische computerlesbare Medien, auf denen Anweisungen gespeichert sind, die bei Ausführung durch den einen oder die mehreren Prozessoren den einen oder die mehreren Prozessoren dazu veranlassen, Vorgänge, die das Verfahren nach einem der Ansprüche 1 bis 9 umfassen, durchzuführen.

11. Ein oder mehrere nicht transitorische computerlesbare Medien, auf denen Anweisungen gespeichert sind, die bei Ausführung durch einen oder mehrere Prozessoren den einen oder die mehreren Prozessoren dazu veranlassen, Vorgänge, die das Verfahren nach einem der Ansprüche 1 bis 9 umfassen, durchzuführen.

## Revendications

1. Procédé de génération d'une image de synthèse d'une formation géologique (108), le procédé comprenant les étapes suivantes :
recevoir (502), par un ou plusieurs processeurs, une pluralité d'images de fragments de roche (116), chacune des images de fragments de roche étant une image d'une pluralité de découpes de roche respectifs (114) obtenus à partir d'une formation souterraine pendant le forage de puits, chacune des images de fragments de roche (116) étant associée à une profondeur particulière ou à une plage de profondeurs sous la surface de la terre (110) depuis lesquelles les déblais de roche de l'image ont été obtenus ;
sélectionner (504), par les un ou plusieurs processeurs, des parties des images de fragments de roche, les parties sélectionnées correspondant à une découpe de roche (114) ou à une partie d'une découpe de roche (114) ; et
générer (506), par les un ou plusieurs processeurs, une image de formation géologique (118) sur la base des parties sélectionnées des images de fragments de roche, l'image de formation géologique (118) étant indicative d'une ou plusieurs caractéristiques géologiques de la formation souterraine à chacune des profondeurs le long du puits de forage (112),
où la génération de l'image de formation géologique comprend de combiner les parties sélectionnées des images de fragments de roche dans l'image de formation géologique, où la combinaison des parties sélectionnées des images de fragments de roche dans l'image de formation géologique comprend les étapes suivantes :
agencer de manière séquentielle les une ou plusieurs parties sélectionnées des images de fragments de roche le long d'une première dimension dans l'image de formation géologique, où les une ou plusieurs parties sélectionnées des images de fragments de roche sont disposées de manière séquentielle dans l'image de formation géologique en fonction de la profondeur, et
extrapoler ou interpoler une partie de l'image de formation géologique (118) sur la base des images de fragments de roche sélectionnées.

2. Procédé selon la revendication 1, dans lequel les une ou plusieurs caractéristiques géologiques de la formation souterraine le long du puits de forage comprennent au moins l'une parmi :
la porosité de la formation souterraine le long du puits de forage, ou
la perméabilité de la formation souterraine le long du puits de forage.

3. Procédé selon la revendication 1, dans lequel la sélection des parties sélectionnées des images de fragments de roche comprend l'étape suivante :
pour chacune des images de fragments de roche, segmenter l'image de fragments de roche en une pluralité de segments d'image, chacun des segments d'image correspondant à un grain de roche respectif différent dans l'image de fragments de roche.

4. Procédé selon la revendication 3, dans lequel la segmentation de l'image de fragments de roche comprend d'identifier des bords (304) dans l'image de fragments de roche.

5. Procédé selon la revendication 3, dans lequel la segmentation de l'image de fragments de roche comprend d'identifier des régions contiguës dans l'image de fragments de roche.

6. Procédé selon la revendication 3, dans lequel l'image de fragments de roche est segmentée sur la base d'une transformation par ligne de partage des eaux.

7. Procédé selon la revendication 3, dans lequel la sélection des parties des images de fragments de roche comprend les étapes suivantes : pour chacune des images de fragments de roche :
identifier le segment d'image correspondant au grain de roche présentant une plus grande surface parmi les grains de roche dans l'image du fragments de roche, et
sélectionner le segment d'image identifié comme l'une des parties des images de fragments de roche.

8. Procédé selon la revendication 1, dans lequel l'image de formation géologique comprend de multiples instances d'au moins l'une des parties sélectionnées des images de fragments de roche.

9. Procédé selon l'une quelconque des revendications précédentes, dans lequel l'extrapolation ou l'interpolation de la partie de l'image de formation géologique (118) sur la base de l'image de formation géologique (118) des images de fragments de roche sélectionnées comprend d'inclure de multiples instances d'une partie sélectionnée particulière d'une première des images de fragments de roche pour représenter la formation souterraine 108 à une profondeur particulière, et autour de celle-ci, de la partie sélectionnée particulière de la première des images de fragments de roche.

10. Système comprenant :
un ou plusieurs processeurs ; et
un ou plusieurs supports non transitoires, lisibles par ordinateur, stockant des instructions qui, lorsqu'elles sont exécutées par un ou plusieurs processeurs, amènent les un ou plusieurs processeurs à exécuter des opérations comprenant le procédé de l'une quelconque des revendications 1 à 9.

11. un ou plusieurs supports non transitoires, lisibles par ordinateur, stockant des instructions qui, lorsqu'elles sont exécutées par un ou plusieurs processeurs, amènent les un ou plusieurs processeurs à exécuter des opérations comprenant le procédé de l'une quelconque des revendications 1 à 9.
